# EUROPEAN PATENT SPECIFICATION

(11) **EP 3 357 715 B1**
(45) Date of publication and mention of the grant of the patent: **22.04.2020**
(21) Application number: 17196582.5
(22) Date of filing: 16.10.2017
(51) Int. Cl.: B60C 15/06, B60C 13/00, B60C 9/02

(54) **PNEUMATIC TIRE**
LUFTREIFEN
PNEUMATIQUE

(30) Priority: 06.02.2017 JP 2017019515
(43) Date of publication of application: 08.08.2018
(73) Proprietor: Sumitomo Rubber Industries, Ltd., Kobe-shi, Hyogo-ken (JP)
(72) Inventor: MEGURO, Yuya, Kobe-shi, Hyogo 651-0072 (JP)
(74) Representative: Manitz Finsterwald Patent- und Rechtsanwaltspartnerschaft mbB

(56) References cited:
- EP-A1- 0 947 358
- EP-A1- 2 821 259
- EP-A2- 0 298 673
- EP-A2- 0 311 291
- EP-A2- 0 409 518
- WO-A1-2012/080121
- FR-A1- 2 243 086

## Description

### BACKGROUND OF THE INVENTION

### Field of the Invention

The present invention relates to a pneumatic tire.

### Description of the Background Art

A tire includes a pair of beads. Each bead includes a core and an apex. The apex extends from the core outward in the radial direction. The apex is formed from a crosslinked rubber having a high hardness.

The carcass of the tire is normally formed by turning up a carcass ply around the core. Accordingly, in the carcass ply, a main portion extending from the equator plane toward the core and a turned-up portion extending from the core outward in the radial direction along the apex are formed. In EP 0 298 673 A2, an example of a tire comprising a carcass and an apex is disclosed. Another known tire is disclosed in EP 2821259 A1.

In the tire, each bead portion is fitted to a rim. In a running state, a large load is applied to this bead portion. Thus, the durability of the bead portion is important. Regarding the configuration of the bead portion, various examinations have been made. Examples of the examinations are disclosed in Japanese Laid-Open Patent Publication No. 2012-025280 and Japanese Laid-Open Patent Publication (translation of PCT application) No. 2013-545671.

In the tire disclosed in Japanese Laid-Open Patent Publication No. 2012-025280, each bead includes, in addition to an apex extending from a core outward in the radial direction (hereinafter, first apex), another apex (hereinafter, second apex) at the axially outer side of a turned-up portion of a carcass.

Also in the tire disclosed in Japanese Laid-Open Patent Publication (translation of PCT application) No. 2013-545671, a bead filler (corresponding to a first apex) and an outer strip (corresponding to a second apex) are provided in each bead. The height of the bead filler is set to be less than 20% of a cross-sectional height of the tire.

Further improvement of durability is desired. In a running state of a tire, each bead portion repeats deformation and restoration. At this time, strain is easily concentrated particularly in the vicinity of an end of a first apex. This strain concentration hinders durability improvement. Existing tires have not been sufficiently examined regarding inhibition of the strain concentration. Accordingly, the durability has not been able to be sufficiently improved in some cases.

The size of a bead influences the durability. The sizes of existing beads are often defined on the basis of a relationship with a cross-sectional height of a tire. However, the cross-sectional height of the tire includes a parameter less related directly to the durability of a bead portion, such as the thickness of a tread. When the sizes of beads are determined on the basis of this definition, an expected effect of durability improvement has not been obtained in some cases.

An object of the present invention is to provide a pneumatic tire having improved durability.

### SUMMARY OF THE INVENTION

A pneumatic tire according to the present invention includes a tread, a pair of sidewalls, a pair of beads, and a carcass. Each bead includes a core and a first apex extending from the core outward in a radial direction. In a state where the tire is mounted on a normal rim and inflated with air to a normal internal pressure and no load is applied to the tire, when a position, on a profile of an outer surface of the tire, at which a width of the tire is at its maximum is referred to as reference position Pm₀, a straight line that passes through the reference position Pm₀ and extends in an axial direction is referred to as reference line M₀, a height from the reference position Pm₀ to an outer end of the tread in the radial direction is denoted by Ht₀, and a reference line that is located outward of the reference line M₀ in the radial direction and extends in the axial direction and from which a distance to the reference line M₀ is 0.2 times of the height Ht₀ is denoted by L₀, a radius of curvature Rp₀ of a circular arc Cp₀ that has a center Zp₀ on the reference line M₀ and passes through a point of intersection Pp₀ between the reference line M₀ and an outer surface of the carcass and a point of intersection Pq₀ between the reference line L₀ and the outer surface of the carcass is smaller than a distance Lp₀ between the center Zp₀ and an end of the first apex. In a state where the tire is mounted on the normal rim and inflated with air to the normal internal pressure and a load equal to 120% of the normal load is applied to the tire, when a position, on the profile of the outer surface of the tire, at which the width of the tire is at its maximum is referred to as reference position Pm₁₂₀, a straight line that passes through the reference position Pm₁₂₀ and extends in the axial direction is referred to as reference line M₁₂₀, a height from the reference position Pm₁₂₀ to the outer end of the tread in the radial direction is denoted by Ht₁₂₀, and a reference line that is located outward of the reference line M₁₂₀ in the radial direction and extends in the axial direction and from which a distance to the reference line M₁₂₀ is 0.2 times of the height Ht₁₂₀ is denoted by L₁₂₀, a radius of curvature Rp₁₂₀ of a circular arc Cp₁₂₀ that has a center Zp₁₂₀ on the reference line M₁₂₀ and passes through a point of intersection Pp₁₂₀ between the reference line M₁₂₀ and the outer surface of the carcass and a point of intersection Pq₁₂₀ between the reference line L₁₂₀ and the outer surface of the carcass is smaller than a distance Lp₁₂₀ between the center Zp₁₂₀ and the end of the first apex.

Preferably, a ratio (Rp₁₂₀/Rp₀) of the radius of curvature Rp₁₂₀ relative to the radius of curvature Rp₀ is not less than 0.4 and not greater than 0.7.

Preferably, a ratio (Rp₀/Lp₀) of the radius of curvature Rp₀ relative to the distance Lp₀ is not less than 0.7 and not greater than 0.9.

Preferably, a ratio (Rp₁₂₀/Lp₁₂₀) of the radius of curvature Rp₁₂₀ relative to the distance Lp₁₂₀ is not less than 0.7 and not greater than 0.9.

Preferably, when a point of intersection between the reference line L₀ and the profile of the outer surface of the tire is denoted by Pl₀, a radius of curvature Rm₀ of a circular arc Cm₀ that has a center Zm₀ on the reference line M₀ and passes through the reference position Pm₀ and the point of intersection Pl₀ is smaller than a distance Lm₀ between the center Zm₀ and the end of the first apex. When a point of intersection between the reference line L₁₂₀ and the profile of the outer surface of the tire is denoted by Pl₁₂₀, a radius of curvature Rm₁₂₀ of a circular arc Cm₁₂₀ that has a center Zm₁₂₀ on the reference line M₁₂₀ and passes through the reference position Pm₁₂₀ and the point of intersection Pl₁₂₀ is smaller than a distance Lm₁₂₀ between the center Zm₁₂₀ and the end of the first apex.

Preferably, a ratio (Rm₁₂₀/Rm₀) of the radius of curvature Rm₁₂₀ relative to the radius of curvature Rm₀ is not less than 0.4 and not greater than 0.7.

Preferably, a ratio (Rm₀/Lm₀) of the radius of curvature Rm₀ relative to the distance Lm₀ is not less than 0.7 and not greater than 0.9.

Preferably, a ratio (Rm₁₂₀/Lm₁₂₀) of the radius of curvature Rm₁₂₀ relative to the distance Lm₁₂₀ is not less than 0.7 and not greater than 0.9.

Preferably, the bead further includes a second apex located outward of the first apex in the axial direction. The carcass includes a carcass ply. The carcass ply includes a main portion extending from one of the beads to the other of the beads and a turned-up portion located outward of each bead in the axial direction. The turned-up portion is located between the first apex and the second apex. In a state where the tire is mounted on the normal rim and inflated with air to the normal internal pressure and no load is applied to the tire, a ratio (Hc/H2) of a height Hc in the radial direction from a bead base line to an outer edge of the turned-up portion of the carcass ply, relative to a height H2 in the radial direction from the bead base line to an outer edge of the second apex, is not less than 1.05.

The bead may further include a second apex located outward of the first apex in the axial direction. The carcass may include a carcass ply. The carcass ply may include a main portion extending from one of the beads to the other of the beads and a turned-up portion located outward of each bead in the axial direction. The turned-up portion may be located between the first apex and the second apex. In a state where the tire is mounted on the normal rim and inflated with air to the normal internal pressure and no load is applied to the tire, a ratio (H2/Hc) of a height H2 in the radial direction from a bead base line to an outer edge of the second apex, relative to a height Hc in the radial direction from the bead base line to an outer edge of the turned-up portion of the carcass ply, may be not less than 1.05.

Preferably, the second apex has a thickness of not less than 1.5 mm and a length of not less than 20 mm and not greater than 60 mm.

The present inventors have made detailed examination for a bead structure for improving durability. As a result, the present inventors have found that the relationship between the shape of a carcass and a bead structure greatly influences the durability. Particularly, the present inventors have found that, when a bead structure is determined on the basis of a relationship with the shape of a carcass in a state where no load is applied and in a state where a large load is applied, the durability can be effectively improved as compared to the existing method in which a bead structure is determined on the basis of a relationship with a cross-sectional height.

In the pneumatic tire according to the present invention, in a state where no load is applied to the tire and in a state where a load equal to 120% of the normal load is applied to the tire, a positional relationship between the contour of the carcass and the end of the first apex is appropriately set. Accordingly, from a state of no load to a state where a large load is applied, strain in the vicinity of the end of the first apex is effectively alleviated. During running, a large load is applied to each bead portion located radially inward of the ground-contact surface of the tread. At this time, this bead portion deforms. A load applied to a bead portion located radially inward of a surface of the tread that is not in contact with the ground is small. At this time, deformation of this bead portion is small. In the tire, even if the bead portion repeats deformation and restoration when the tire rolls, concentration of strain and concentration of heat generation in the vicinity of the end of the first apex are effectively alleviated. The tire has excellent durability.

### BRIEF DESCRIPTION OF THE DRAWINGS

FIG. 1 is a cross-sectional view of a portion of a pneumatic tire according to an embodiment of the present invention;
FIG. 2 is an enlarged cross-sectional view of a portion of the tire in FIG. 1 in a state where no load is applied to the tire;
FIG. 3 is an enlarged cross-sectional view of a portion of the tire in FIG. 1 in a state where a load is applied to the tire; and
FIG. 4 is a cross-sectional view of a portion of a pneumatic tire according to another embodiment of the present invention.

### DESCRIPTION OF THE PREFERRED EMBODIMENTS

Hereinafter, the present invention will be described in detail based on preferred embodiments with appropriate reference to the drawings.

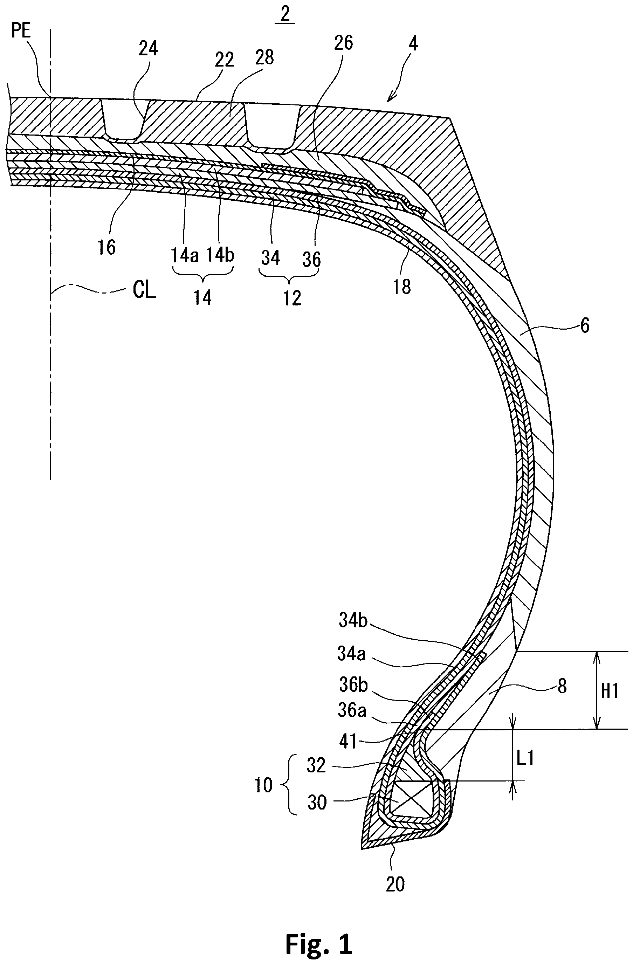

FIG. 1 shows a pneumatic tire 2. In this drawing, the up-down direction is the radial direction of the tire 2, the right-left direction is the axial direction of the tire 2, and the direction perpendicular to the surface of the sheet is the circumferential direction of the tire 2. In FIG. 1, an alternate long and short dash line CL represents the equator plane of the tire 2. Reference character PE represents a radially outer end of the tire 2. This is the equator of the tire 2. The shape of the tire 2 is symmetrical about the equator plane CL except for a tread pattern.

The tire 2 includes a tread 4, a pair of sidewalls 6, a pair of clinches 8, a pair of beads 10, a carcass 12, a belt 14, a band 16, an inner liner 18, and a pair of chafers 20. The tire 2 is of a tubeless type. The tire 2 is mounted to a small truck.

The tread 4 has a shape that is convex outward in the radial direction. The tread 4 forms a tread surface 22 that is brought into contact with a road surface. Grooves 24 are formed on the tread 4. The tread pattern is formed by the grooves 24. The tread 4 includes a base layer 26 and a cap layer 28. The cap layer 28 is located outward of the base layer 26 in the radial direction. The cap layer 28 is laminated on the base layer 26. The base layer 26 is formed from a crosslinked rubber that has excellent adhesiveness. A typical base rubber of the base layer 26 is a natural rubber. The cap layer 28 is formed from a crosslinked rubber that has excellent wear resistance, heat resistance, and grip performance.

Each sidewall 6 extends from the edge of the tread 4 substantially inward in the radial direction. The radially inner edge of the sidewall 6 is joined to the clinch 8. The sidewall 6 is formed from a crosslinked rubber that has excellent cut resistance and weather resistance. The sidewall 6 prevents the carcass 12 from being damaged.

Each clinch 8 is located substantially inward of the sidewall 6 in the radial direction. The clinch 8 extends from the edge of the sidewall 6 substantially inward in the radial direction. The clinch 8 is located outward of the bead 10 and the carcass 12 in the axial direction. The clinch 8 is formed from a crosslinked rubber that has excellent wear resistance. The clinch 8 comes into contact with a flange of a rim.

Each bead 10 is located inward of the clinch 8 in the axial direction. The bead 10 includes a core 30 and a first apex 32. The core 30 has a ring shape and includes a wound non-stretchable wire. A typical material of the wire is steel. The first apex 32 extends from the core 30 outward in the radial direction. The first apex 32 is tapered outward in the radial direction. The first apex 32 is formed from a crosslinked rubber having a high hardness.

The carcass 12 includes a carcass ply. In this embodiment, the carcass 12 includes two carcass plies, that is, a first ply 34 and a second ply 36. The first ply 34 and the second ply 36 extend on and between the beads 10 at both sides. The first ply 34 and the second ply 36 are turned up around the cores 30. The first ply 34 includes a first main portion 34a extending from one of the beads 10 to the other of the beads 10 and a first turned-up portion 34b located outward of each bead 10 in the axial direction. The first main portion 34a extends along the inner side of the second ply 36. The first main portion 34a is laminated on the outer side of the inner liner 18. The first turned-up portion 34b extends substantially in the radial direction along the inner side of the clinch 8. The second ply 36 includes a second main portion 36a extending from one of the beads 10 to the other of the beads 10 and a second turned-up portion 36b located outward of each bead 10 in the axial direction. The second main portion 36a extends along the inner side of the tread 4 and each sidewall 6. The second main portion 36a is laminated on the outer side of the first main portion 34a. The second turned-up portion 36b extends substantially in the radial direction along the outer side of the bead 10. The second turned-up portion 36b is located between the bead 10 and the first turned-up portion 34b.

In this embodiment, an edge of the first turned-up portion 34b of the first ply 34 is located outward of an edge of the second turned-up portion 36b of the second ply 36 in the radial direction. When the carcass 12 includes a plurality of carcass plies as described above, the edge of the turned-up portion located at the radially outermost side is referred to as outer edge of the turned-up portion of the carcass ply. In this embodiment, the edge of the first turned-up portion 34b of the first ply 34 is the outer edge of the turned-up portion of the carcass ply.

As shown, the outer edge of the turned-up portion of the carcass ply is located outward of an end 41 of the first apex 32 in the radial direction. In this embodiment, the edge of the first turned-up portion 34b is located outward of the end 41 of the first apex 32. In this embodiment, the edge of the second turned-up portion 36b is also located outward of the end 41 of the first apex 32. The edge of the second turned-up portion 36b may not be located outward of the end 41 of the first apex 32.

Although not shown, each of the first ply 34 and the second ply 36 includes multiple cords aligned with each other, and a topping rubber. The absolute value of the angle of each cord relative to the equator plane CL is 75° to 90°. In other words, the carcass 12 has a radial structure. The cords are formed from an organic fiber. Examples of preferable organic fibers include polyester fibers, nylon fibers, rayon fibers, polyethylene naphthalate fibers, and aramid fibers. The carcass 12 may be formed of a single carcass ply.

The belt 14 is located inward of the tread 4 in the radial direction. The belt 14 is laminated on the carcass 12. The belt 14 reinforces the carcass 12. The belt 14 includes an inner layer 14a and an outer layer 14b. As is obvious from FIG. 1, the width of the inner layer 14a is slightly larger than the width of the outer layer 14b in the axial direction. Although not shown, each of the inner layer 14a and the outer layer 14b includes multiple cords aligned with each other, and a topping rubber. Each cord is tilted relative to the equator plane CL. The absolute value of the tilt angle is generally not less than 10° and not greater than 35°. The direction in which each cord of the inner layer 14a is tilted relative to the equator plane CL is opposite to the direction in which each cord of the outer layer 14b is tilted relative to the equator plane CL. The material of the cords is preferably steel. An organic fiber may be used for the cords. The width, in the axial direction, of the belt 14 is preferably equal to or greater than 0.7 times of the maximum width of the tire 2. The belt 14 may include three or more layers.

The band 16 is located outward of the belt 14 in the radial direction. In the axial direction, the width of the band 16 is larger than the width of the belt 14. Although not shown, the band 16 includes a cord and a topping rubber. The cord is helically wound. The band 16 has a so-called jointless structure. The cord extends substantially in the circumferential direction. The angle of the cord relative to the circumferential direction is not greater than 5° and further not greater than 2°. The belt 14 is held by this cord. Thus, lifting of the belt 14 is inhibited. The cord is formed from an organic fiber. Examples of preferable organic fibers include nylon fibers, polyester fibers, rayon fibers, polyethylene naphthalate fibers, and aramid fibers.

The inner liner 18 is located inward of the carcass 12. The inner liner 18 is joined to the inner surface of the carcass 12. The inner liner 18 is formed from a crosslinked rubber that has excellent air blocking property. A typical base rubber of the inner liner 18 is an isobutylene-isoprene-rubber or halogenated isobutylene-isoprene-rubber. The inner liner 18 maintains the internal pressure of the tire 2.

Each chafer 20 is located in the vicinity of the bead 10. When the tire 2 is mounted onto the rim, the chafer 20 comes into contact with the rim. Because of this contact, the vicinity of the bead 10 is protected. In this embodiment, each chafer 20 includes a fabric and a rubber with which the fabric is impregnated. The chafer 20 may be integrated with the clinch 8. In this case, the material of the chafer 20 is the same as the material of the clinch 8.

In the present specification, the normal rim means a rim specified in a standard on which the tire 2 is based. The "standard rim" in the JATMA standard, the "Design Rim" in the TRA standard, and the "Measuring Rim" in the ETRTO standard are normal rims. In the present specification, the normal internal pressure means an internal pressure specified in the standard on which the tire 2 is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures. In the present specification, a normal load means a load specified in the standard on which the tire 2 is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

In the present invention, the contour of the outer surface of the tire 2 is referred to as profile. When the grooves 24 and projections are provided on the outer surface, the profile is represented by using a virtual outer surface obtained by assuming that the grooves 24 and the projections are not present.

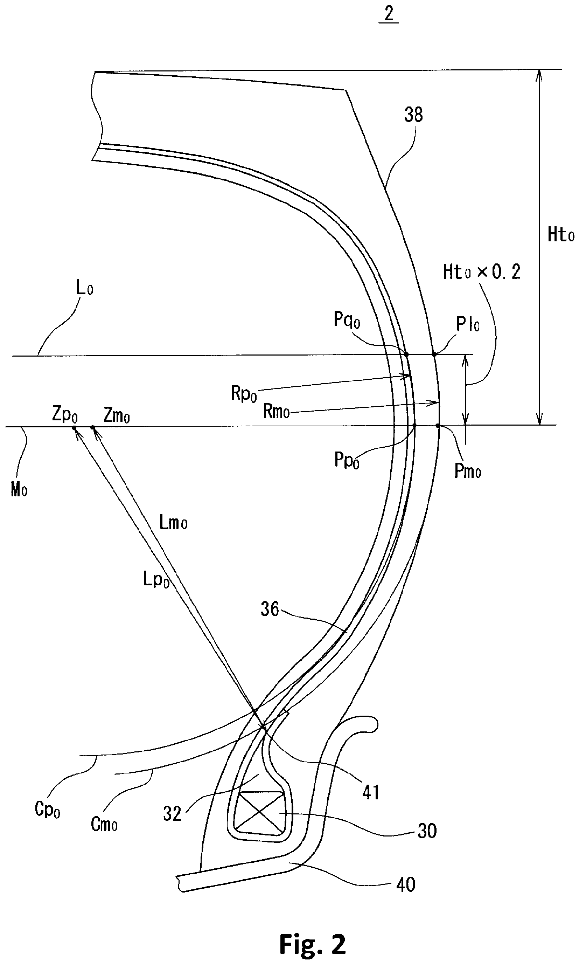

FIG. 2 shows a profile 38 of a portion of the tire 2 shown in FIG. 1. This drawing further shows the contours of the core 30, the first apex 32, and the second ply 36. The tire 2 is mounted on a normal rim 40. The tire 2 is inflated with air to the normal internal pressure. No load is applied to the tire 2. In this drawing, the up-down direction is the radial direction of the tire 2, the right-left direction is the axial direction of the tire 2, and the direction perpendicular to the surface of the sheet is the circumferential direction of the tire 2.

In FIG. 2, reference character Pm₀ is a position on the profile 38 of the outer surface. At this position, the width of the tire 2 is at its maximum. The position Pm₀ is referred to as reference position. A straight line M₀ is a reference line that passes through the reference position Pm₀ and extends in the axial direction. A double-headed arrow Ht₀ represents the height from the reference position Pm₀ to the outer end PE of the tread 4 in the radial direction. A straight line L₀ is a reference line that is located outward of the reference line M₀ in the radial direction and extends in the axial direction. The distance between the reference line L₀ and the reference line M₀ is 0.2 times of the height Ht₀.

In FIG. 2, a point Pp₀ is the point of intersection between the reference line M₀ and the outer surface of the carcass 12. In this embodiment, the point Pp₀ is the point of intersection between the reference line M₀ and the outer surface of the second main portion 36a of the second ply 36. A point Pq₀ is the point of intersection between the reference line L₀ and the outer surface of the carcass 12. In this embodiment, the point Pq₀ is the point of intersection between the reference line L₀ and the outer surface of the second main portion 36a of the second ply 36.

In FIG. 2, reference character Cp₀ represents a circular arc having a center Zp₀ on the reference line M₀. The circular arc Cp₀ extends from the point of intersection Pp₀ toward the outer side in the radial direction so as to coincide with the contour of the carcass 12. Specifically, the circular arc Cp₀ is a circular arc that has a center on the straight line M₀ and passes through the point of intersection Pp₀ and the point of intersection Pq₀. In FIG. 2, the circular arc Cp₀ is drawn so as to extend to the vicinity of the first apex 32.

In FIG. 2, reference character Lp₀ represents the distance between the end 41 of the first apex 32 and the center Zp₀. In the tire 2, a radius of curvature Rp₀ of the circular arc Cp₀ is smaller than the distance Lp₀. In this case, the end 41 of the first apex 32 is located outside a virtual circle including the circular arc Cp₀.

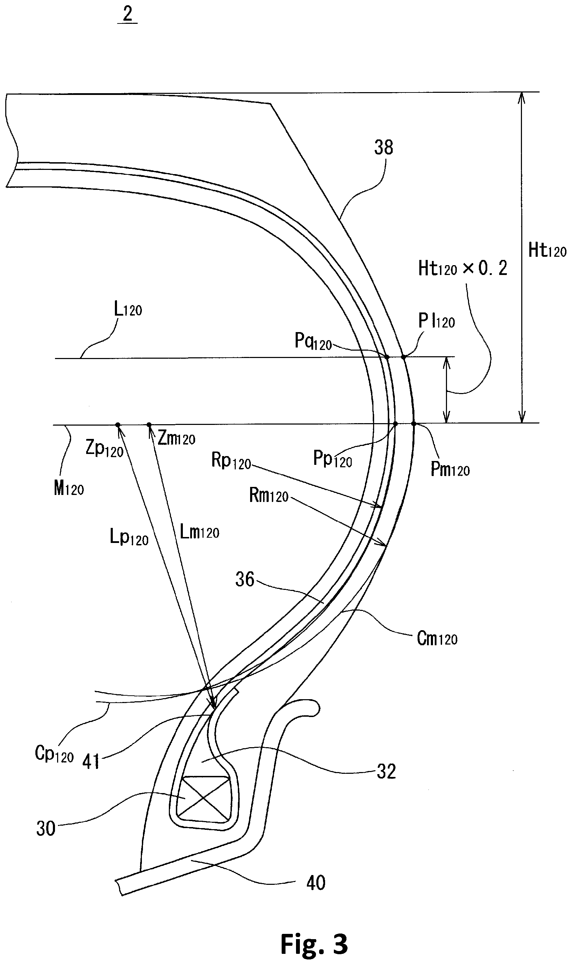

FIG. 3 shows the profile 38 of the portion of the tire 2 shown in FIG. 1. This drawing further shows the contours of the core 30, the first apex 32, and the second ply 36. The tire 2 is mounted on the normal rim 40. The tire 2 is inflated with air to a normal internal pressure, and a load equal to 120% of the normal load is applied to the tire 2 from the outer side toward the inner side in the radial direction. In this profile 38, a side portion thereof greatly bends as compared to that of the profile 38 in FIG. 2. In this drawing, the up-down direction is the radial direction of the tire 2, the right-left direction is the axial direction of the tire 2, and the direction perpendicular to the surface of the sheet is the circumferential direction of the tire 2.

In FIG. 3, reference character Pm₁₂₀ represents a position on the profile 38 of the outer surface. At this position, the width of the tire 2 is at its maximum. The position Pm₁₂₀ is referred to as reference position. A straight line M₁₂₀ is a reference line that passes through the reference position Pm₁₂₀ and extends in the axial direction. A double-headed arrow Ht₁₂₀ represents the height from the reference position Pm₁₂₀ to the outer end PE of the tread 4 in the radial direction. A straight line L₁₂₀ is a reference line that is located outward of the reference line M₁₂₀ in the radial direction and extends in the axial direction. The distance between the reference line L₁₂₀ and the reference line M₁₂₀ is 0.2 times of the height Ht₁₂₀.

In FIG. 3, a point Pp₁₂₀ is the point of intersection between the reference line M₁₂₀ and the outer surface of the carcass 12. In this embodiment, the point Pp₁₂₀ is the point of intersection between the reference line M₁₂₀ and the outer surface of the second main portion 36a of the second ply 36. A point Pq₁₂₀ is the point of intersection between the reference line L₁₂₀ and the outer surface of the carcass 12. In this embodiment, the point Pq₁₂₀ is the point of intersection between the reference line L₁₂₀ and the outer surface of the second main portion 36a of the second ply 36.

In FIG. 3, reference character Cp₁₂₀ represents a circular arc having a center Zp₁₂₀ on the reference line M₁₂₀. The circular arc Cp₁₂₀ extends from the point of intersection Pp₁₂₀ toward the outer side in the radial direction so as to coincide with the contour of the carcass 12. Specifically, the circular arc Cp₁₂₀ is a circular arc that has a center on the straight line M₁₂₀ and passes through the point of intersection Pp₁₂₀ and the point of intersection Pq₁₂₀. In FIG. 3, the circular arc Cp₁₂₀ is drawn so as to extend to the vicinity of the first apex 32.

In FIG. 3, reference character Lp₁₂₀ represents the distance between the end 41 of the first apex 32 and the center Zp₁₂₀. In the tire 2, a radius of curvature Rp₁₂₀ of the circular arc Cp₁₂₀ is smaller than the distance Lp₁₂₀. In this case, the end 41 of the first apex 32 is located outside a virtual circle including the circular arc Cp₁₂₀.

Hereinafter, advantageous effects of the present invention will be described.

In a running state of a tire, each bead portion repeats deformation and restoration. At this time, strain is easily concentrated particularly in the vicinity of an end of a first apex. This strain concentration hinders durability improvement. Existing tires have not been sufficiently examined regarding inhibition of the strain concentration.

The present inventors have made detailed examination for a bead structure for improving durability. As a result, the present inventors have found that the relationship between the shape of a carcass and a bead structure greatly influences the durability. Particularly, the present inventors have found that, when a bead structure is determined on the basis of a relationship with the shape of a carcass in a state where no load is applied and in a state where a large load is applied, the durability can be effectively improved as compared to the existing method in which a bead structure is determined on the basis of a relationship with a cross-sectional height. Specifically, it has been found out that in an existing tire, by an end of a first apex entering a trajectory of a circular arc of the contour of a carcass, concentration of strain and concentration of heat generation occur in the vicinity of the end. The concentration of strain and the concentration of heat generation can be factors for looseness between components of the tire. During running, a large load is applied to each bead portion located radially inward of the ground-contact surface of the tread. At this time, this bead portion deforms. A load applied to a bead portion located radially inward of a surface of the tread that is not in contact with the ground is small. At this time, deformation of this bead portion is small. When the relationship between the contour of the carcass and the position of the end of the first apex is appropriately set both in a state where no load is applied and in a state where a large load is applied, strain in the vicinity of the end of the first apex can be effectively alleviated even if the bead portion repeats deformation and restoration. Accordingly, favorable durability can be achieved even when the size of the first apex is decreased.

In the pneumatic tire 2 according to the present invention, in a state where no load is applied to the tire 2, the aforementioned radius of curvature Rp₀ of the circular arc Cp₀ is smaller than the distance Lp₀ between the end 41 of the first apex 32 and the center Zp₀. In other words, the end 41 of the first apex 32 is located outside the virtual circle including the circular arc Cp₀. In a state where a load equal to 120% of the normal load is applied to the tire 2, the aforementioned radius of curvature Rp₁₂₀ of the circular arc Cp₁₂₀ is smaller than the distance Lp₁₂₀ between the end 41 of the first apex 32 and the center Zp₁₂₀. In other words, the end 41 of the first apex 32 is located outside the virtual circle including the circular arc Cp₁₂₀. From a state where no load is applied to the tire 2 to a state where a load equal to 120% of the normal load is applied to the tire 2, the end 41 of the first apex 32 is located outside the virtual circle obtained by extending the contour of the carcass 12. In the tire 2, concentration of strain and concentration of heat generation in the vicinity of the end 41 of the first apex 32 are effectively alleviated even when the bead 10 portion repeats deformation and restoration due to rolling of the tire 2. The tire 2 has excellent durability.

The ratio (Rp₁₂₀/Rp₀) of the radius of curvature Rp₁₂₀ relative to the radius of curvature Rp₀ is preferably not greater than 0.7. When the carcass 12 is bent such that the ratio (Rp₁₂₀/Rp₀) is not greater than 0.7, the carcass 12 can effectively absorb a load. A load is effectively prevented from being concentrated on the bead 10 portion. The tire 2 has excellent durability. From this viewpoint, the ratio (Rp₁₂₀/Rp₀) is more preferably not greater than 0.65. The ratio (Rp₁₂₀/Rp₀) is preferably not less than 0.4. When the ratio (Rp₁₂₀/Rp₀) is set to be not less than 0.4, bending of the side portion is appropriately maintained. Concentration of strain and heat generation due to an increase in the bending is effectively inhibited. The tire 2 has excellent durability. From this viewpoint, the ratio (Rp₁₂₀/Rp₀) is more preferably not less than 0.45.

The ratio (Rp₀/Lp₀) of the radius of curvature Rp₀ relative to the distance Lp₀ is preferably not greater than 0.90. When the ratio (Rp₀/Lp₀) is set to be not greater than 0.90, concentration of strain and concentration of heat generation in the vicinity of the end 41 of the first apex 32 are more effectively alleviated in the tire 2. The tire 2 has excellent durability. From this viewpoint, the ratio (Rp₀/Lp₀) is more preferably not greater than 0.85. The ratio (Rp₀/Lp₀) is preferably not less than 0.70. When the ratio (Rp₀/Lp₀) is set to be not less than 0.70, the stiffness of the bead 10 portion is appropriately maintained. In the tire 2, a decrease in the durability due to a decrease in the stiffness is inhibited. The tire 2 has excellent durability. Furthermore, with the tire 2, favorable control stability is maintained. From this viewpoint, the ratio (Rp₀/Lp₀) is more preferably not less than 0.73.

The ratio (Rp₁₂₀/Lp₁₂₀) of the radius of curvature Rp₁₂₀ relative to the distance Lp₁₂₀ is preferably not greater than 0.90. When the ratio (Rp₁₂₀/Lp₁₂₀) is set to be not greater than 0.90, concentration of strain and concentration of heat generation in the vicinity of the end 41 of the first apex 32 are more effectively alleviated in the tire 2. The tire 2 has excellent durability. From this viewpoint, the ratio (Rp₁₂₀/Lp₁₂₀) is more preferably not greater than 0.85. The ratio (Rp₁₂₀/Lp₁₂₀) is preferably not less than 0.70. When the ratio (Rp₁₂₀/Lp₁₂₀) is set to be not less than 0.70, the stiffness of the bead 10 portion is appropriately maintained. In the tire 2, a decrease in the durability due to a decrease in the stiffness is inhibited. The tire 2 has excellent durability. Furthermore, with the tire 2, favorable handling stability is maintained. From this viewpoint, the ratio (Rp₁₂₀/Lp₁₂₀) is more preferably not less than 0.73.

As shown in FIG. 2, in this embodiment, the entirety of the first apex 32 is preferably located outside the virtual circle including the circular arc Cp₀. When the entirety of the first apex 32 is located outside the virtual circle including the circular arc Cp₀, concentration of strain and concentration of heat generation on the first apex 32 are effectively alleviated. The tire 2 has excellent durability.

As shown in FIG. 2, in this embodiment, between the point of intersection Pp₀ and the point of intersection Pq₀, the contour of the carcass 12 and the circular arc Cp₀ coincide with each other. It is preferred that between these points, the contour of the carcass 12 and the circular arc Cp₀ coincide with each other as described above. When the contour of the carcass 12 and the circular arc Cp₀ coincide with each other, the side portion of the tire 2 flexibly bends. With the tire 2, more favorable durability and ride comfort can be achieved. Here, the phase "the contour and the circular arc coincide with each other" represents that the maximum value of the distance between the contour and the circular arc is not greater than a certain value. Specifically, this phrase represents that when the maximum value of the distance between the contour and the circular arc that is measured along a line normal to the circular arc is denoted by Δp, the ratio (Δp/R) of the maximum value Δp relative to a radius of curvature R of the circular arc is not greater than 0.03. The same applies below.

Although not shown, a position Pn₀ is a position that is located on the profile 38 of the outer surface and is away from the reference position Pm₀ inward in the radial direction by a distance equal to 0.2 times of the height Ht₀. Although not shown, a point Pr₀ is the point of intersection between the outer surface of the carcass 12 and a reference line that extends in the axial direction from the position Pn₀. Between the point of intersection Pp₀ and the point of intersection Pr₀, the contour of the carcass 12 and the circular arc Cp₀ preferably coincide with each other. When the contour of the carcass 12 and the circular arc Cp₀ coincide with each other, the side portion of the tire 2 flexibly bends. More favorable durability and ride comfort can be achieved. Between the point of intersection Pq₀ and the point of intersection Pr₀, the contour of the carcass 12 and the circular arc Cp₀ further preferably coincide with each other. When the contour of the carcass 12 and the circular arc Cp₀ coincide with each other between the point of intersection Pq₀ and the point of intersection Pr₀, the side portion of the tire 2 flexibly bends in a wide range. Accordingly, further favorable durability and ride comfort can be achieved.

As shown in FIG. 3, in this embodiment, the entirety of the first apex 32 is preferably located outside the virtual circle including the circular arc Cp₁₂₀. When the entirety of the first apex 32 is located outside the virtual circle including the circular arc Cp₁₂₀, concentration of strain and concentration of heat generation on the first apex 32 are effectively alleviated. The tire 2 has excellent durability.

As shown in FIG. 3, in this embodiment, between the point of intersection Pp₁₂₀ and the point of intersection Pq₁₂₀, the contour of the carcass 12 and the circular arc Cp₁₂₀ coincide with each other. It is preferred that between these points, the contour of the carcass 12 and the circular arc Cp₁₂₀ coincide with each other as described above. When the contour of the carcass 12 and the circular arc Cp₁₂₀ coincide with each other, the side portion of the tire 2 flexibly bends. With the tire 2, more favorable durability and ride comfort can be achieved.

Although not shown, a position Pn₁₂₀ is a position that is located on the profile 38 of the outer surface and is away from the reference position Pm₁₂₀ inward in the radial direction by a distance equal to 0.2 times of the height Ht₁₂₀. Although not shown, a point Pr₁₂₀ is the point of intersection between the outer surface of the carcass 12 and a reference line that extends in the axial direction from the position Pn₁₂₀. Between the point of intersection Pp₁₂₀ and the point of intersection Pr₁₂₀, the contour of the carcass 12 and the circular arc Cp₁₂₀ preferably coincide with each other. When the contour of the carcass 12 and the circular arc Cp₁₂₀ coincide with each other, the side portion of the tire 2 flexibly bends. More favorable durability and ride comfort can be achieved. Between the point of intersection Pq₁₂₀ and the point of intersection Pr₁₂₀, the contour of the carcass 12 and the circular arc Cp₁₂₀ further preferably coincide with each other. When the contour of the carcass 12 and the circular arc Cp₁₂₀ coincide with each other between the point of intersection Pq₁₂₀ and the point of intersection Pr₁₂₀, the side portion of the tire 2 flexibly bends in a wide range. Accordingly, more favorable durability and ride comfort can be achieved.

In FIG. 2, a point Pl₀ is the point of intersection between the reference line L₀ and the profile 38 of the outer surface. Reference character Cm₀ represents a circular arc having a center Zm₀ on the straight line M₀. The circular arc Cm₀ extends from the reference position Pm₀ toward the outer side in the radial direction so as to coincide with the profile 38 of the tire 2. Specifically, the circular arc Cm₀ is a circular arc that has a center Zm₀ on the straight line M₀ and passes through the reference position Pm₀ and the point of intersection Pl₀. In FIG. 2, the circular arc Cm₀ is drawn so as to extend to the vicinity of the first apex 32.

In FIG. 2, a double-headed arrow Lm₀ represents the distance between the end 41 of the first apex 32 and the center Zm₀. In the tire 2, a radius of curvature Rm₀ of the circular arc Cm₀ is preferably smaller than the distance Lm₀. In other words, the end 41 of the first apex 32 is preferably located outside a virtual circle including the circular arc Cm₀. Accordingly, concentration of strain and concentration of heat generation in the vicinity of the end 41 of the first apex 32 when the tire 2 bends are effectively alleviated. The tire 2 has excellent durability.

In FIG. 3, a position Pl₁₂₀ is the point of intersection between the reference line L₁₂₀ and the profile 38 of the outer surface. Reference character Cm₁₂₀ represents a circular arc having a center Zm₁₂₀ on the straight line M₁₂₀. The circular arc Cm₁₂₀ extends from the reference position Pm₁₂₀ toward the outer side in the radial direction so as to coincide with the profile 38 of the tire 2. Specifically, the circular arc Cm₁₂₀ is a circular arc that has a center Zm₁₂₀ on the straight line M₁₂₀ and passes through the reference position Pm₁₂₀ and the point of intersection Pl₁₂₀. In FIG. 3, the circular arc Cm₁₂₀ is drawn so as to extend to the vicinity of the first apex 32.

In FIG. 3, a double-headed arrow Lm₁₂₀ represents the distance between the end 41 of the first apex 32 and the center Zm₁₂₀. In the tire 2, a radius of curvature Rm₁₂₀ of the circular arc Cm₁₂₀ is preferably smaller than the distance Lm₁₂₀. In other words, the end 41 of the first apex 32 is preferably located outside a virtual circle including the circular arc Cm₁₂₀. Accordingly, concentration of strain and concentration of heat generation in the vicinity of the end 41 of the first apex 32 when the tire 2 bends are effectively alleviated. The tire 2 has excellent durability.

The ratio (Rm₁₂₀/Rm₀) of the radius of curvature Rm₁₂₀ relative to the radius of curvature Rm₀ is preferably not greater than 0.7. When the outer surface of the side portion is bent such that the ratio (Rm₁₂₀/Rm₀) is not greater than 0.7, the side portion can effectively absorb a load. A load is effectively prevented from being concentrated on the bead 10 portion. The tire 2 has excellent durability. From this viewpoint, the ratio (Rm₁₂₀/Rm₀) is more preferably not greater than 0.65. The ratio (Rm₁₂₀/Rm₀) is preferably not less than 0.4. When the ratio (Rm₁₂₀/Rm₀) is set to be not less than 0.4, bending of the side portion is appropriately maintained. Concentration of strain and heat generation due to an increase in the bending is effectively inhibited. The tire 2 has excellent durability. From this viewpoint, the ratio (Rm₁₂₀/Rm₀) is more preferably not less than 0.45.

The ratio (Rm₀/Lm₀) of the radius of curvature Rm₀ relative to the distance Lm₀ is preferably not greater than 0.95. When the ratio (Rm₀/Lm₀) is set to be not greater than 0.95, concentration of strain and concentration of heat generation in the vicinity of the end 41 of the first apex 32 are more effectively alleviated in the tire 2. The tire 2 has excellent durability. From this viewpoint, the ratio (Rm₀/Lm₀) is more preferably not greater than 0.90. The ratio (Rm₀/Lm₀) is preferably not less than 0.75. When the ratio (Rm₀/Lm₀) is set to be not less than 0.75, the stiffness of the bead 10 portion is appropriately maintained. In the tire 2, a decrease in the durability due to a decrease in the stiffness is inhibited. The tire 2 has excellent durability. Furthermore, in the tire 2, the stiffness of the bead 10 portion is appropriately maintained, and thus favorable handling stability is maintained. From these viewpoints, the ratio (Rm₀/Lm₀) is more preferably not less than 0.78.

The ratio (Rm₁₂₀/Lm₁₂₀) of the radius of curvature Rm₁₂₀ relative to the distance Lm₁₂₀ is preferably not greater than 0.95. When the ratio (Rm₁₂₀/Lm₁₂₀) is set to be not greater than 0.95, concentration of strain and concentration of heat generation in the vicinity of the end 41 of the first apex 32 are more effectively alleviated in the tire 2. The tire 2 has excellent durability. From this viewpoint, the ratio (Rm₁₂₀/Lm₁₂₀) is more preferably not greater than 0.90. The ratio (Rm₁₂₀/Lm₁₂₀) is preferably not less than 0.75. When the ratio (Rm₁₂₀/Lm₁₂₀) is set to be not less than 0.75, the stiffness of the bead 10 portion is appropriately maintained. In the tire 2, a decrease in the durability due to a decrease in the stiffness is inhibited. The tire 2 has excellent durability. Furthermore, in the tire 2, the stiffness of the bead 10 portion is appropriately maintained, and thus favorable handling stability is maintained. From these viewpoints, the ratio (Rm₁₂₀/Lm₁₂₀) is more preferably not less than 0.78.

As shown in FIG. 2, in this embodiment, the entirety of the first apex 32 is preferably located outside the virtual circle including the circular arc Cm₀. When the entirety of the first apex 32 is located outside the virtual circle including the circular arc Cm₀, concentration of strain and concentration of heat generation in the first apex 32 are effectively alleviated. The tire 2 has excellent durability.

As shown in FIG. 2, in this embodiment, between the reference position Pm₀ and the position Pl₀, the profile 38 and the circular arc Cm₀ coincide with each other. It is preferred that between these positions, the profile 38 and the circular arc Cm₀ coincide with each other as described above. When the profile 38 and the circular arc Cm₀ coincide with each other, the side portion of the tire 2 flexibly bends. With the tire 2, more favorable durability and ride comfort can be achieved. Here, the phrase "the profile and the circular arc coincide with each other" represents that the maximum value of the distance between the profile and the circular arc is not greater than a certain value. Specifically, this phrase represents that when the maximum value of the distance between the profile and the circular arc that is measured along a line normal to the circular arc is denoted by Δm, the ratio (Δm/R) of the maximum value Δm relative to a radius of curvature R of the circular arc is not greater than 0.03.

In the tire 2, between the position Pl₀ and the position Pn₀, the profile 38 and the circular arc Cm₀ further preferably coincide with each other. When the profile 38 and the circular arc Cm₀ coincide with each other between the position Pl₀ and the position Pn₀, the side portion of the tire 2 flexibly bends in a wide range. Accordingly, further favorable durability and ride comfort can be achieved.

As shown in FIG. 3, in this embodiment, the entirety of the first apex 32 is preferably located outside the virtual circle including the circular arc Cm₁₂₀. When the entirety of the first apex 32 is located outside the virtual circle including the circular arc Cm₁₂₀, concentration of strain and concentration of heat generation in the first apex 32 are effectively alleviated. The tire 2 has excellent durability.

As shown in FIG. 3, in this embodiment, between the reference position Pm₁₂₀ and the position Pl₁₂₀, the profile 38 and the circular arc Cm₁₂₀ coincide with each other. It is preferred that between these positions, the profile 38 and the circular arc Cm₁₂₀ coincide with each other as described above. When the profile 38 and the circular arc Cm₁₂₀ coincide with each other, the side portion of the tire 2 flexibly bends. With the tire 2, more favorable durability and ride comfort can be achieved.

In the tire 2, between the position Pl₁₂₀ and the position Pn₁₂₀, the profile 38 and the circular arc Cm₁₂₀ further preferably coincide with each other. When the profile 38 and the circular arc Cm₁₂₀ coincide with each other between the position Pl₁₂₀ and the position Pn₁₂₀, the side portion of the tire 2 flexibly bends in a wide range. Accordingly, further favorable durability and ride comfort can be achieved.

In FIG. 1, a double-headed arrow L1 represents the length of the first apex 32. The length L1 is represented as the length from the axial center of the bottom surface of the first apex 32 to the end of the first apex 32. The length L1 is measured in a state where the tire 2 is mounted on the normal rim 40 and inflated with air to the normal internal pressure and no load is applied to the tire 2. The same applies to a distance H1, a height Hc, a height H2, and a distance Ha that will be described later.

In the tire 2, the length L1 is preferably not less than 5 mm. When the length L1 is set to be not less than 5 mm, the first apex 32 can effectively contribute to the stiffness of the bead 10 portion. The tire 2 has excellent durability. The tire 2 has excellent handling stability. The length L1 is preferably not greater than 15 mm. When the length L1 is set to be not greater than 15 mm, bending deformation of the first apex 32 is small. The first apex 32 is prevented from becoming hard to return from deformation even as a result of parking for a long period of time. In the tire 2, a flat spot is prevented.

As shown in FIG. 1, the end 41 of the first apex 32 is preferably located inward of the inner edge of the sidewall 6 in the radial direction. Accordingly, the hard clinch 8 is located outward of the end 41 of the first apex 32 in the axial direction. Therefore, the sidewall 6 which is more flexible than the clinch 8 is not present outward of the end 41 of the first apex 32 in the axial direction. This configuration effectively alleviates concentration of strain at the end 41 of the first apex 32. The tire 2 has excellent durability.

In FIG. 1, a double-headed arrow H1 represents the distance in the radial direction between the end 41 of the first apex 32 and the inner edge of the sidewall 6. The distance H1 is preferably not less than 5 mm. When the distance H1 is set to be not less than 5 mm, concentration of strain at the end 41 of the first apex 32 is effectively alleviated. From this viewpoint, the distance H1 is more preferably not less than 10 mm.

In the tire 2, a complex elastic modulus E1 of the first apex 32 is preferably not less than 60 MPa. When the elastic modulus E1 is set to be not less than 60 MPa, the first apex 32 contributes to support of the tire 2. The tire 2 has excellent handling stability. The complex elastic modulus E1 is preferably not greater than 70 MPa. When the elastic modulus E1 is set to be not greater than 70 MPa, influence of the first apex 32 on the stiffness is inhibited. With the tire 2, favorable ride comfort is maintained.

In the present invention, the complex elastic modulus E1 of the first apex 32 and a complex elastic modulus E2 of a second apex described later are measured in compliance with the standard of "JIS K 6394". The measurement conditions are as follows.
Viscoelasticity spectrometer: "VESF-3" of Iwamoto Seisakusho
Initial strain: 10%
Dynamic strain: ±1%
Frequency: 10 Hz
Deformation mode: tension
Measurement temperature: 70°C

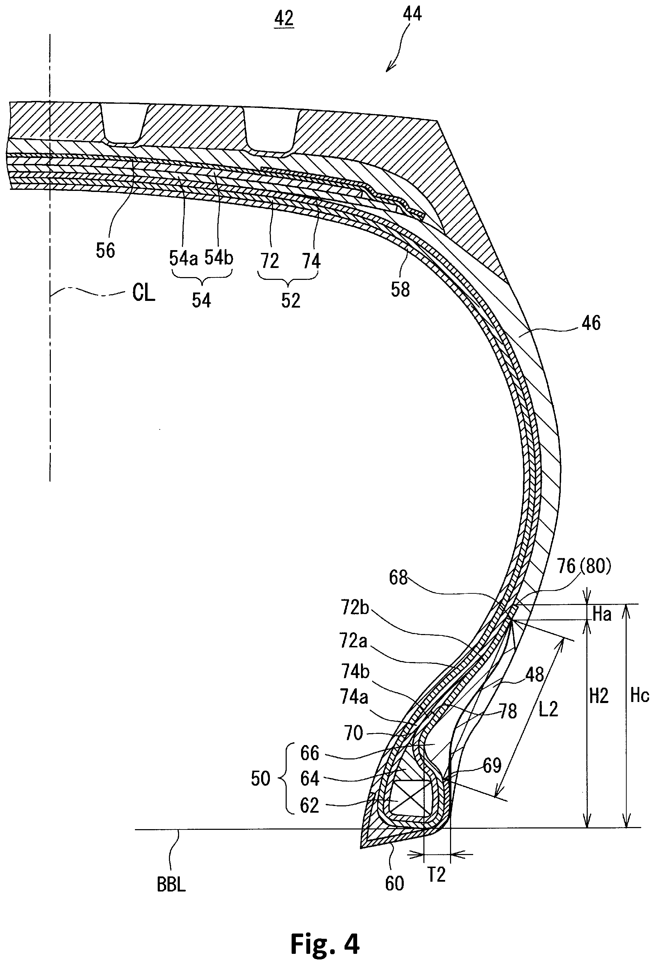

FIG. 4 shows a pneumatic tire 42 according to another embodiment of the present invention. In this drawing, the up-down direction is the radial direction of the tire 42, the right-left direction is the axial direction of the tire 42, and the direction perpendicular to the surface of the sheet is the circumferential direction of the tire 42. In FIG. 4, an alternate long and short dash line CL represents the equator plane of the tire 42. The shape of the tire 42 is symmetrical about the equator plane CL except for a tread pattern.

The tire 42 includes a tread 44, a pair of sidewalls 46, a pair of clinches 48, a pair of beads 50, a carcass 52, a belt 54, a band 56, an inner liner 58, and a pair of chafers 60. The tire 42 is of a tubeless type. The tire 42 is mounted to a small truck. The tire 42 is the same as the tire 2 in FIG. 1 except for the clinches 48, the beads 50, and the carcass 52. Hereinafter, the clinches 48, the beads 50, and the carcass 52 will be described.

Each clinch 48 is located substantially inward of the sidewall 46 in the radial direction. The clinch 48 extends from the edge of the sidewall 46 substantially inward in the radial direction. The clinch 48 is located outward of the bead 50 and the carcass 52 in the axial direction. The clinch 48 is in contact with a second apex of the bead 50. The clinch 48 is formed from a crosslinked rubber that has excellent wear resistance. The clinch 48 comes into contact with a flange of a rim.

Each bead 50 is located inward of the clinch 48 in the axial direction. The bead 50 includes a core 62, a first apex 64, and a second apex 66. The core 62 has a ring shape and includes a wound non-stretchable wire. A typical material of the wire is steel. The first apex 64 extends from the core 62 outward in the radial direction. The first apex 64 is tapered outward in the radial direction. The second apex 66 is located outward of the first apex 64 in the axial direction. The second apex 66 is located between the clinch 48 and the carcass 52 in the axial direction. In the tire 42, an outer edge 68 of the second apex 66 is located outward of an end 70 of the first apex 64 in the radial direction. Each of the first apex 64 and the second apex 66 is formed from a crosslinked rubber having a high hardness.

The carcass 52 includes a carcass ply. In this embodiment, the carcass 52 includes two carcass plies, that is, a first ply 72 and a second ply 74. The first ply 72 and the second ply 74 extend on and between the beads 50 at both sides. The first ply 72 and the second ply 74 are turned up around the cores 62.

The first ply 72 includes a first main portion 72a extending from one of the beads 50 to the other of the beads 50 and a first turned-up portion 72b located outward of each bead 50 in the axial direction. The first main portion 72a extends along the inner side of the second ply 74. The first main portion 72a is laminated on the outer side of the inner liner 58. The first turned-up portion 72b extends substantially in the radial direction along the inner side of the second apex 66. The first turned-up portion 72b passes between the first apex 64 and the second apex 66. In this embodiment, an edge 76 of the first turned-up portion 72b is located outward of the outer edge 68 of the second apex 66 in the radial direction.

The second ply 74 includes a second main portion 74a extending from one of the beads 50 to the other of the beads 50 and a second turned-up portion 74b located outward of each bead 50 in the axial direction. The second main portion 74a extends along the inner side of the tread 44 and each sidewall 46. The second main portion 74a is laminated on the outer side of the first main portion 72a. The second turned-up portion 74b extends substantially in the radial direction along the outer side of the bead 50. The second turned-up portion 74b is located between the bead 50 and the first turned-up portion 72b. In this embodiment, an edge 78 of the turned-up portion 74b is located between an inner edge 69 and the outer edge 68 of the second apex 66 in the radial direction.

In this embodiment, the edge 76 of the turned-up portion 72b of the first ply 72 is located outward of the edge 78 of the turned-up portion 74b of the second ply 74 in the radial direction. When the carcass 52 includes a plurality of carcass plies as described above, the edge of the turned-up portion located at the radially outermost side is referred to as outer edge 80 of the turned-up portion of the carcass ply. In this embodiment, the edge 76 of the turned-up portion 72b of the first ply 72 is the outer edge 80 of the turned-up portion of the carcass ply.

Although not shown, in a state where the tire 42 is mounted on a normal rim and inflated with air to the normal internal pressure and no load is applied to the tire 42, reference character Pm₀ is a position on a profile of the outer surface. At this position, the width of the tire 42 is at its maximum. The position Pm₀ is referred to as reference position. A straight line M₀ is a reference line that passes through the reference position Pm₀ and extends in the axial direction. A double-headed arrow Ht₀ represents the height from the reference position Pm₀ to the outer end of the tread 44 in the radial direction. A straight line L₀ is a reference line that is located outward of the reference line M₀ in the radial direction and extends in the axial direction. The distance between the reference line L₀ and the reference line M₀ is 0.2 times of the height Ht₀.

Although not shown, a point Pp₀ is the point of intersection between the reference line M₀ and the outer surface of the carcass 52. In this embodiment, the point Pp₀ is the point of intersection between the reference line M₀ and the outer surface of the second main portion 74a of the second ply 74. A point Pq₀ is the point of intersection between the reference line L₀ and the outer surface of the carcass 52. In this embodiment, the point Pq₀ is the point of intersection between the reference line L₀ and the outer surface of the second main portion 74a of the second ply 74.

Although not shown, reference character Cp₀ represents a circular arc having a center Zp₀ on the reference line M₀. The circular arc Cp₀ extends from the point of intersection Pp₀ toward the outer side in the radial direction so as to coincide with the contour of the carcass 52. Specifically, the circular arc Cp₀ is a circular arc that has a center on the straight line M₀ and passes through the point of intersection Pp₀ and the point of intersection Pq₀.

Although not shown, reference character Lp0 represents the distance between the end 70 of the first apex 64 and the center Zp₀. In the tire 42, a radius of curvature Rp₀ of the circular arc Cp₀ is smaller than the distance Lp₀. In this case, the end 70 of the first apex 64 is located outside a virtual circle including the circular arc Cp₀.

Although not shown, in a state where the tire 42 is mounted on the normal rim and inflated with air to the normal internal pressure and a load equal to 120% of the normal load is applied to the tire 42, reference character Pm₁₂₀ is a position on the profile of the outer surface. At this position, the width of the tire 42 is at its maximum. The position Pm₁₂₀ is referred to as reference position. A straight line M₁₂₀ is a reference line that passes through the reference position Pm₁₂₀ and extends in the axial direction. A double-headed arrow Ht₁₂₀ represents the height from the reference position Pm₁₂₀ to the outer end of the tread 44 in the radial direction. A straight line L₁₂₀ is a reference line that is located outward of the reference line M₁₂₀ in the radial direction and extends in the axial direction. The distance between the reference line L₁₂₀ and the reference line M₁₂₀ is 0.2 times of the height Ht₁₂₀.

Although not shown, a point Pp₁₂₀ is the point of intersection between the reference line M₁₂₀ and the outer surface of the carcass 52. In this embodiment, the point Pp₁₂₀ is the point of intersection between the reference line M₁₂₀ and the outer surface of the second main portion 74a of the second ply 74. A point Pq₁₂₀ is the point of intersection between the reference line L₁₂₀ and the outer surface of the carcass 52. In this embodiment, the point Pq₁₂₀ is the point of intersection between the reference line L₁₂₀ and the outer surface of the second main portion 74a of the second ply 74.

Although not shown, reference character Cp₁₂₀ represents a circular arc having a center Zp₁₂₀ on the reference line M₁₂₀. The circular arc Cp₁₂₀ extends from the point of intersection Pp₁₂₀ toward the outer side in the radial direction so as to coincide with the contour of the carcass 52. Specifically, the circular arc Cp₁₂₀ is a circular arc that has a center on the straight line M₁₂₀ and passes through the point of intersection Pp₁₂₀ and the point of intersection Pq₁₂₀.

Although not shown, reference character Lp₁₂₀ represents the distance between the end 70 of the first apex 64 and the center Zp₁₂₀. In the tire 42, a radius of curvature Rp₁₂₀ of the circular arc Cp₁₂₀ is smaller than the distance Lp₁₂₀. In this case, the end 70 of the first apex 64 is located outside a virtual circle including the circular arc Cp₁₂₀.

In the pneumatic tire 42 according to the present invention, in a state where no load is applied to the tire 42, the aforementioned radius of curvature Rp₀ of the circular arc Cp₀ is smaller than the distance Lp₀ between the end 70 of the first apex 64 and the center Zp₀. In other words, the end 70 of the first apex 64 is located outside the virtual circle including the circular arc Cp₀. In a state where a load equal to 120% of the normal load is applied to the tire 42, the aforementioned radius of curvature Rp₁₂₀ of the circular arc Cp₁₂₀ is smaller than the distance Lp₁₂₀ between the end 70 of the first apex 64 and the center Zp₁₂₀. In other words, the end 70 of the first apex 64 is located outside the virtual circle including the circular arc Cp₁₂₀. From a state where no load is applied to the tire 42 to a state where a load equal to 120% of the normal load is applied to the tire 42, the end 70 of the first apex 64 is located outside the virtual circle obtained by extending the contour of the carcass 52. In the tire 42, concentration of strain and concentration of heat generation in the vicinity of the end 70 of the first apex 64 are effectively alleviated even when a bead 50 portion repeats deformation and restoration. The tire 42 has excellent durability.

In FIG. 4, a solid line BBL is a bead base line. The bead base line BBL is a line that defines a rim diameter of a rim R (see JATMA). A double-headed arrow Hc represents the height from the bead base line BBL to the outer edge 80 of the turned-up portion of the carcass ply. In this embodiment, the height Hc is the height from the bead base line BBL to the edge 76 of the turned-up portion 72b of the first ply 72. A double-headed arrow H2 represents the height from the bead base line BBL to the outer edge 68 of the second apex 66.

As shown in FIG. 4, in this embodiment, the height Hc is larger than the height H2. That is, the edge 76 of the turned-up portion 72b of the first ply 72 is located outward of the edge 68 of the second apex 66. Accordingly, the torsional stiffness of the side portion of the tire 42 smoothly changes from the vicinity of the maximum width position of the tire 42 to the bead 50 portion. That is, in a region outward of the edge 76 of the turned-up portion 72b of the first ply 72 (an outer side portion region), the main portion 72a of the first ply 72 and the main portion 74a of the second ply 74 are located within the side portion. In a region between the edge 68 of the second apex 66 and the edge 76 of the turned-up portion 72b of the first ply 72 (an intermediate side portion region), in addition to the above two main portions 72a and 74a, the turned-up portion 72b of the first ply 72 is located within the side portion. The torsional stiffness in the intermediate side portion region is higher than the torsional stiffness in the outer side portion region. In a region inward of the edge 68 of the second apex 66 (an inner side portion region), in addition to these portions, the second apex 66 is further located. The torsional stiffness in the inner side portion region is higher than the torsional stiffness in the intermediate side portion region. In the tire 42, the torsional stiffness increases from the outer side portion region toward the inner side portion region. Furthermore, the torsional stiffness of the second apex 66 is higher than that of the first ply 72 and the second ply 74. Since the second apex 66 having high torsional stiffness is located inward of the edge 76 of the turned-up portion 72b of the first ply 72, a rapid change in the torsional stiffness is inhibited. The torsional stiffness of the side portion smoothly changes. This change contributes to the ride comfort of the tire 42. The tire 42 has excellent ride comfort.

The ratio (Hc/H2) of the height Hc relative to the height H2 is preferably not less than 1.05. When the outer edge 80 of the turned-up portion of the carcass ply and the outer edge 68 of the second apex 66 are located close to each other, concentration of strain occurs in the vicinity of this outer edge. This concentration of strain can be a factor for looseness in the vicinity of the outer edge 80 of the turned-up portion. When the ratio (Hc/H2) is set to be not less than 1.05, concentration of strain is inhibited in the vicinity of this outer edge. In the tire 42, looseness in the vicinity of the outer edge 80 of the turned-up portion is inhibited. The tire 42 has excellent durability. The ratio (Hc/H2) is preferably not greater than 1.8. When the ratio (Hc/H2) is set to be not greater than 1.8, the second apex 66 effectively contributes to the stiffness of the bead 50 portion. With the tire 42, excellent handling stability is achieved.

In FIG. 4, the distance Ha is the distance in the radial direction between the outer edge 68 of the second apex 66 and the outer edge 80 of the turned-up portion of the carcass ply. The distance Ha is preferably not less than 2.0 mm. When the distance Ha is set to be not less than 2.0 mm, concentration of strain is inhibited in the vicinity of the outer edge 80 of the turned-up portion of the carcass ply. In the tire 42, looseness in the vicinity of the outer edge 80 of the turned-up portion of the carcass ply is inhibited. The tire 42 has excellent durability. The distance Ha is preferably not greater than 50 mm. When the distance Ha is set to be not greater than 50 mm, the second apex 66 effectively contributes to the stiffness of the bead 50 portion. With the tire 42, excellent handling stability is achieved.

Although not shown, the height H2 may be larger than the height Hc. In this case, the second apex 66 covers the edge 76 of the turned-up portion 72b of the first ply 72. Since the edge 76 of the turned-up portion 72b is covered with the second apex 66, a step formed by the edge 76 is prevented from influencing the outer surface of the tire 42. In the tire 42, occurrence of bulge or dent on the outer surface is inhibited. The tire 42 has excellent appearance.

The ratio (H2/Hc) of the height H2 relative to the height Hc is preferably not less than 1.05. When the outer edge 80 of the turned-up portion of the carcass ply and the outer edge 68 of the second apex 66 are located close to each other, concentration of strain occurs in the vicinity of this outer edge. This concentration of strain can be a factor for looseness in the vicinity of the outer edge 80 of the turned-up portion. When the ratio (H2/Hc) is set to be not less than 1.05, concentration of strain is inhibited in the vicinity of this outer edge. In the tire 42, looseness in the vicinity of the outer edge 80 of the turned-up portion is inhibited. The tire 42 has excellent durability. The ratio (H2/Hc) is preferably not greater than 1.8. When the ratio (H2/Hc) is set to be not greater than 1.8, the stiffness of the bead 50 portion is appropriately maintained. With the tire 42, favorable ride comfort is achieved.

Although not shown, even in the case where the height H2 is larger than the height Hc, the distance Ha is defined as the distance in the radial direction between the outer edge 80 of the turned-up portion of the carcass ply and the outer edge 68 of the second apex 66. The distance Ha is preferably not less than 2.0 mm. When the distance Ha is set to be not less than 2.0 mm, concentration of strain is inhibited in the vicinity of the outer edge 80 of the turned-up portion of the carcass ply. In the tire 42, looseness in the vicinity of the outer edge 80 of the turned-up portion of the carcass ply is inhibited. The tire 42 has excellent durability. Furthermore, when the distance Ha is set to be not less than 2.0 mm, the second apex 66 effectively contributes to the stiffness of the bead 50 portion. With the tire 42, excellent handling stability is achieved. The distance Ha is preferably not greater than 50 mm. When the distance Ha is set to be not greater than 50 mm, the stiffness of the bead 50 portion is appropriately maintained. With the tire 42, favorable ride comfort is achieved

In FIG. 4, a double-headed arrow L2 represents the length of the second apex 66. The length L2 is the distance between the outer edge 68 and the inner edge 69 of the second apex 66. The length L2 is preferably not less than 20 mm. When the length L2 is set to be not less than 20 mm, the second apex 66 effectively contributes to the stiffness of the bead 50 portion. With the tire 42, excellent handling stability is achieved. From this viewpoint, the length L2 is more preferably not less than 25 mm. The length L2 is preferably not greater than 60 mm. When the length L2 is set to be not greater than 60 mm, influence of the second apex 66 on a vertical stiffness constant is inhibited. With the tire 42, favorable ride comfort is maintained. Furthermore, influence of the second apex 66 on the tire weight is inhibited. Influence of the second apex 66 on rolling resistance is inhibited. From this viewpoint, the length L2 is more preferably not greater than 55 mm.

In FIG. 4, a double-headed arrow T2 represents the maximum thickness of the second apex 66. The thickness of the second apex 66 is measured along a normal line that is normal to the outer surface of the second apex 66 and drawn from a point on the inner surface of the second apex 66. The maximum thickness T2 is the maximum value of the distance between the inner surface and the outer surface of the second apex 66 that is measured along the normal line.

The maximum thickness T2 is preferably not less than 1.5 mm. When the maximum thickness T2 is set to be not less than 1.5 mm, the second apex 66 has stiffness sufficient to be able to withstand a load. The tire 42 has excellent durability. Furthermore, the second apex 66 effectively contributes to a lateral stiffness constant. With the tire 42, excellent handling stability is achieved. From this viewpoint, the maximum thickness T2 is more preferably not less than 2.0 mm. The maximum thickness T2 is preferably not greater than 5.0 mm. When the maximum thickness T2 is set to be not greater than 5.0 mm, influence of the second apex 66 on the tire weight is inhibited. Influence of the second apex 66 on rolling resistance is inhibited. From this viewpoint, the maximum thickness T2 is more preferably not greater than 4.5 mm.

In the tire 42, the second apex 66 is located between: the clinch 48; and the turned-up portion 72b of the first ply 72 and the turned-up portion 74b of the second ply 74. In the tire 42, the turned-up portion 72b of the first ply 72 and the turned-up portion 74b of the second ply 74 are located more inward in the axial direction than a turned-up portion of a conventional tire. This location can inhibit concentration of strain on the turned-up portions. Since occurrence of v is inhibited, the tire 42 has excellent durability.

A complex elastic modulus E1 of the first apex 64 is preferably not less than 60 MPa. When the elastic modulus E1 is set to be not less than 60 MPa, the first apex 64 contributes to support of the tire 42. The tire 42 has excellent handling stability. The complex elastic modulus E1 is preferably not greater than 70 MPa. When the elastic modulus E1 is set to be not greater than 70 MPa, influence of the first apex 64 on the stiffness is inhibited. With the tire 42, favorable ride comfort is maintained.

A complex elastic modulus E2 of the second apex 66 is preferably not less than 60 MPa. When the elastic modulus E2 is set to be not less than 60 MPa, the second apex 66 contributes to the stiffness. The tire 42 has excellent handling stability. The complex elastic modulus E2 is preferably not greater than 70 MPa. When the elastic modulus E2 is set to be not greater than 70 MPa, influence of the second apex 66 on the stiffness is inhibited. The tire 42 has excellent handling stability.

### EXAMPLES

Hereinafter, effects of the present invention are shown by means of examples, but the present invention should not be construed in a limited manner based on the description of these examples.

### [Experiment 1]

### [Example 1]

A pneumatic tire of Example 1 having the configuration shown in FIG. 1 and the specifications shown in Table 1 below was obtained. The size of the tire was set to "LT265/75R16 123/120Q". In the tire, the distance Lp₀ is larger than the radius of curvature Rp₀. That is, in a state where no load is applied, the end of the first apex is located outward of the circular arc extending so as to coincide with the contour of the carcass. This is indicated as "out" in the row of "carcass contour" of "absence of load" in Table 1. The distance Lp₁₂₀ is larger than the radius of curvature Rp₁₂₀. That is, in a state where a load equal to 120% of the normal load is applied, the end of the first apex is located outside the circular arc extending so as to coincide with the contour of the carcass. This is indicated as "out" in the row of "carcass contour" of "presence of load" in Table 1. The distance Lm₀ is larger than the radius of curvature Rm₀. That is, in a state where no load is applied, the end of the first apex is located outside the circular arc extending so as to coincide with the profile of the outer surface. This is indicated as "out" in the row of "outer surface profile" of "absence of load" in Table 1. The distance Lm₁₂₀ is larger than the radius of curvature Rm₁₂₀. That is, in a state where a load equal to 120% of the normal load is applied, the end of the first apex is located outside the circular arc extending so as to coincide with the profile of the outer surface. This is indicated as "out" in the row of "outer surface profile" of "presence of load" in Table 1. In the tire, the radius of curvature Rp₀ was 88 mm, and the radius of curvature Rm₀ was 120 mm.

In the trial production of the tire, the radius of curvature Rp₀ of the contour of the carcass and the radius of curvature Rm₀ of the profile of the outer surface when no load was applied were controlled on the basis of the shape of a raw cover and the profile of the cavity face of a mold, and the distance Lp₀ and the distance Lm₀ were controlled on the basis of the length of the first apex. The radius of curvature Rp₁₂₀ of the contour of the carcass and the radius of curvature Rm₁₂₀ of the profile of the outer surface when a load was applied were controlled by adjusting the hardness of the sidewall, the hardness of the clinch, the density of the cord of the carcass ply, the tilt angle of the cord relative to the equator plane, etc. by a method that is generally carried out in the tire industry. The distance Lp₁₂₀ and the distance Lm₁₂₀ were measured on the tire produced as a sample. The same applies to trial production of tires of other examples described below.

It is an important requirement of the present invention to locate the end of the first apex outside the circular arc extending so as to coincide with the contour of the carcass or the circular arc extending so as to coincide with the profile of the outer surface. Thus, Table 1 indicates whether the end of the first apex is inside (in) or outside (out) these circular arcs. The values of the distance Lp₀, the distance Lm₀, the distance Lp₁₂₀, and the distance Lm₁₂₀ are not shown in Table 1.

### [Comparative Example 1]

A tire of Comparative Example 1 was obtained in the same manner as Example 1, except that the profile of the sidewall and the contour of the carcass were changed such that the specifications shown in Table 1 were achieved. This tire is a conventional tire.

### [Examples 2 to 6]

Tires of Examples 2 to 6 were obtained in the same manner as Example 1, except that the ratio (Rp₁₂₀/Rp₀) and the ratio (Rm₁₂₀/Rm₀) were set to the values shown in Table 1.

### [Durability]

Each tire was mounted onto a normal rim (size: 7.5J) and inflated with air to an internal pressure of 550 kPa. The tire was mounted to a drum type tire testing machine, and a vertical load of 20 kN was applied to the tire. Running with the tire on a drum having a radius of 1.7 m at a speed of 100 km/h was performed. The running distance until damage to the tire was observed was measured. However, the test was ended if there was no damage at the time when the running distance reached 2500 km. The results are indicated as indexes in Table 1 below with the value in the case where the running distance reached 2500 km being 100. The higher the value is, the better the evaluation is.

### [Table 1]

**Table 1 Results of Evaluation**

| | | Comp. Ex. 1 | Ex. 2 | Ex. 3 | Ex. 4 | Ex. 5 | Ex. 1 | Ex. 6 |
|---|---|---|---|---|---|---|---|---|
| Structure | | FIG. 1 | FIG. 1 | FIG. 1 | FIG. 1 | FIG. 1 | FIG. 1 | FIG. 1 |
| Absence of load | Carcass contour | in | out | out | out | out | out | out |
| | Outer surface profile | in | out | out | out | out | out | out |
| Presence of load | Carcass contour | in | out | out | out | out | out | out |
| | Outer surface profile | in | out | out | out | out | out | out |
| Ratio (Rp₁₂₀/Rp₀) | | 0.85 | 0.40 | 0.45 | 0.55 | 0.65 | 0.70 | 0.75 |
| Ratio (Rm₁₂₀/Rm₀) | | 0.83 | 0.35 | 0.40 | 0.50 | 0.65 | 0.65 | 0.70 |
| Durability (running distance) | | 60 | 70 | 95 | 100 | 100 | 100 | 90 |

### [Experiment 2]

### [Example 7]

A pneumatic tire of Example 7 having the configuration shown in FIG. 4 and the specifications shown in Table 2 below was obtained. The size of the tire was set to "LT265/75R16 123/120Q". In the tire, the radius of curvature Rp₀ was 88 mm, and the radius of curvature Rm₀ was 120 mm. The height H2 in the radial direction from the bead base line to the outer edge of the second apex was 50 mm.

### [Example 8]

A tire of Example 8 was obtained in the same manner as Example 7, except that the height H2 was changed such that the ratio (H2/Hc) was as shown in Table 2.

### [Durability]

The durability was evaluated in the same manner as Experiment 1. The results are shown in Table 2 below. The higher the value is, the better the evaluation is.

### [Table 2]

**Table 2 Results of Evaluation**

| | | Ex. 7 | Ex. 8 |
|---|---|---|---|
| Structure | | FIG. 4 | FIG. 4 |
| Absence of load | Carcass contour | out | out |
| | Outer surface profile | out | out |
| Presence of load | Carcass contour | out | out |
| | Outer surface profile | out | out |
| Ratio (Rp₁₂₀/Rp₀) | | 0.70 | 0.70 |
| Ratio (Rm₁₂₀/Rm₀) | | 0.65 | 0.65 |
| Ratio (H2/Hc) | | 90 | 97 |
| Durability (running distance) | | 100 | 90 |

As shown in Tables 1 and 2, the evaluation is higher in the tires of the examples than in the tire of the comparative example. From the results of evaluation, advantages of the present invention are clear.

The pneumatic tire described above is also applicable to various vehicles.

## Claims

1. A pneumatic tire (2, 42) comprising a tread (4, 44), a pair of sidewalls (6, 46), a pair of beads (10, 50), and a carcass (12, 52), wherein:
each bead (10, 50) includes a core (30, 62) and a first apex (32, 64) extending from the core (30, 62) outward in a radial direction;
**characterized in that**
in a state where the tire (2, 42) is mounted on a normal rim (40) and inflated with air to a normal internal pressure and no load is applied to the tire (2, 42),
when a position, on a profile (38) of an outer surface of the tire (2, 42), at which a width of the tire (2, 42) is at its maximum is referred to as reference position Pm₀, a straight line that passes through the reference position Pm₀ and extends in an axial direction is referred to as reference line M₀, a height from the reference position Pm₀ to an outer end (PE) of the tread (4, 44) in the radial direction is denoted by Ht₀, and a reference line that is located outward of the reference line M₀ in the radial direction and extends in the axial direction and from which a distance to the reference line M₀ is 0.2 times of the height Ht₀ is denoted by L₀,
a radius of curvature Rp₀ of a circular arc Cp₀ that has a center Zp₀ on the reference line M₀ and passes through a point of intersection Pp₀ between the reference line M₀ and an outer surface of the carcass (12, 52) and a point of intersection Pq₀ between the reference line L₀ and the outer surface of the carcass (12, 52) is smaller than a distance Lp₀ between the center Zp₀ and an end (41, 70) of the first apex (32, 64); and
in a state where the tire (2, 42) is mounted on the normal rim (40) and inflated with air to the normal internal pressure and a load equal to 120% of the normal load is applied to the tire (2, 42),
when a position, on the profile (38) of the outer surface of the tire (2, 42), at which the width of the tire (2, 42) is at its maximum is referred to as reference position Pm₁₂₀, a straight line that passes through the reference position Pm₁₂₀ and extends in the axial direction is referred to as reference line M₁₂₀, a height from the reference position Pm₁₂₀ to the outer end (PE) of the tread (4, 44) in the radial direction is denoted by Ht₁₂₀, and a reference line that is located outward of the reference line M₁₂₀ in the radial direction and extends in the axial direction and from which a distance to the reference line M₁₂₀ is 0.2 times of the height Ht₁₂₀ is denoted by L₁₂₀,
a radius of curvature Rp₁₂₀ of a circular arc Cp₁₂₀ that has a center Zp₁₂₀ on the reference line M₁₂₀ and passes through a point of intersection Pp₁₂₀ between the reference line M₁₂₀ and the outer surface of the carcass (12, 52) and a point of intersection Pq₁₂₀ between the reference line L₁₂₀ and the outer surface of the carcass (12, 52) is smaller than a distance Lp₁₂₀ between the center Zp₁₂₀ and the end (41, 70) of the first apex (32, 64).

2. The pneumatic tire (2, 42) according to claim 1, wherein a ratio (Rp₁₂₀/Rp₀) of the radius of curvature Rp₁₂₀ relative to the radius of curvature Rp₀ is not less than 0.4 and not greater than 0.7.

3. The pneumatic tire (2, 42) according to claim 1 or 2, wherein:
when a point of intersection between the reference line L₀ and the profile (38) of the outer surface of the tire (2, 42) is denoted by Pl₀,
a radius of curvature Rm₀ of a circular arc Cm₀ that has a center Zm₀ on the reference line M₀ and passes through the reference position Pm₀ and the point of intersection Pl₀ is smaller than a distance Lm₀ between the center Zm₀ and the end (41, 70) of the first apex (32, 64); and
when a point of intersection between the reference line L₁₂₀ and the profile (38) of the outer surface of the tire (2, 42) is denoted by Pl₁₂₀,
a radius of curvature Rm₁₂₀ of a circular arc Cm₁₂₀ that has a center Zm₁₂₀ on the reference line M₁₂₀ and passes through the reference position Pm₁₂₀ and the point of intersection Pl₁₂₀ is smaller than a distance Lm₁₂₀ between the center Zm₁₂₀ and the end (41, 70) of the first apex (32, 64).

4. The pneumatic tire (2, 42) according to claim 3, wherein a ratio (Rm₁₂₀/Rm₀) of the radius of curvature Rm₁₂₀ relative to the radius of curvature Rm₀ is not less than 0.4 and not greater than 0.7.

5. The pneumatic tire (42) according to any one of claims 1 to 4, wherein
the bead (50) further includes a second apex (66) located outward of the first apex (64) in the axial direction,
the carcass (52) includes a carcass ply (72),
the carcass ply (72) includes a main portion (72a) extending from one of the beads (50) to the other of the beads (50) and a turned-up portion (72b) located outward of each bead (50) in the axial direction,
the turned-up portion (72b) is located between the first apex (64) and the second apex (66), and
in a state where the tire (42) is mounted on the normal rim (40) and inflated with air to the normal internal pressure and no load is applied to the tire (42),
a ratio (Hc/H2) of a height Hc in the radial direction from a bead base line (BBL) to an outer edge (76, 80) of the turned-up portion (72b) of the carcass ply (72), relative to a height H2 in the radial direction from the bead base line (BBL) to an outer edge (68) of the second apex (66), is not less than 1.05.

6. The pneumatic tire (42) according to any one of claims 1 to 4, wherein
the bead (50) further includes a second apex (66) located outward of the first apex (64) in the axial direction,
the carcass (52) includes a carcass ply (72),
the carcass ply (72) includes a main portion (72a) extending from one of the beads (50) to the other of the beads (50) and a turned-up portion (72b) located outward of each bead (50) in the axial direction,
the turned-up portion (72b) is located between the first apex (64) and the second apex (66), and
in a state where the tire (42) is mounted on the normal rim (40) and inflated with air to the normal internal pressure and no load is applied to the tire (42),
a ratio (H2/Hc) of a height H2 in the radial direction from a bead base line (BBL) to an outer edge (68) of the second apex (66), relative to a height Hc in the radial direction from the bead base line (BBL) to an outer edge (76, 80) of the turned-up portion (72b) of the carcass ply (72), is not less than 1.05.

7. The pneumatic tire (42) according to claim 5 or 6, wherein the second apex (66) has a thickness (T2) of not less than 1.5 mm and a length (L2) of not less than 20 mm and not greater than 60 mm.

## Patentansprüche

1. Luftreifen (2, 42) mit einer Lauffläche (4, 44), einem Paar Seitenwänden (6, 46), einem Paar Wülsten (10, 50) und einer Karkasse (12, 52), wobei:
jeder Wulst (10, 50) einen Kern (30, 62) und einen ersten Kernreiter (32, 64) umfasst, der sich von dem Kern (30, 62) in einer radialen Richtung nach außen erstreckt;
**dadurch gekennzeichnet, dass**
in einem Zustand, in dem der Reifen (2, 42) auf eine normale Felge (40) aufgezogen und mit Luft auf einen normalen Innendruck aufgeblasen ist und keine Last auf den Reifen (2, 42) ausgeübt wird,
wenn eine Position auf einem Profil (38) einer Außenfläche des Reifens (2, 42), an der eine Breite des Reifens (2, 42) maximal ist, als Referenzposition Pm₀ bezeichnet wird, eine gerade Linie, die durch die Referenzposition Pm₀ verläuft und sich in einer axialen Richtung erstreckt, als Referenzlinie M₀ bezeichnet wird, eine Höhe von der Referenzposition Pm₀ bis zu einem äußeren Ende (PE) der Lauffläche (4, 44) in der radialen Richtung als Ht₀ bezeichnet wird, und eine Referenzlinie, die in der radialen Richtung außen von der Referenzlinie M₀ liegt und sich in der axialen Richtung erstreckt und von der aus ein Abstand zu der Referenzlinie M₀ das 0,2-fache der Höhe Ht₀ beträgt, als L₀ bezeichnet wird,
ein Krümmungsradius Rp₀ eines Kreisbogens Cp₀, der einen Mittelpunkt Zp₀ auf der Referenzlinie M₀ hat und durch einen Schnittpunkt Pp₀ zwischen der Referenzlinie M₀ und einer Außenfläche der Karkasse (12, 52) und einen Schnittpunkt Pq₀ zwischen der Referenzlinie L₀ und der Außenfläche der Karkasse (12, 52) verläuft, kleiner ist als ein Abstand Lp₀ zwischen dem Mittelpunkt Zp₀ und einem Ende (41, 70) des ersten Kernreiters (32, 64); und
in einem Zustand, in dem der Reifen (2, 42) auf die normale Felge (40) aufgezogen und mit Luft auf den normalen Innendruck aufgepumpt ist und eine Last von 120% der normalen Last auf den Reifen (2, 42) ausgeübt wird,
wenn eine Position auf dem Profil (38) der Außenfläche des Reifens (2, 42), an der die Breite des Reifens (2, 42) maximal ist, als Referenzposition Pm₁₂₀ bezeichnet wird, eine gerade Linie, die durch die Referenzposition Pm₁₂₀ verläuft und sich in der axialen Richtung erstreckt, als Referenzlinie M₁₂₀ bezeichnet wird, eine Höhe von der Referenzposition Pm₁₂₀ bis zu dem äußeren Ende (PE) der Lauffläche (4, 44) in der radialen Richtung als Ht₁₂₀ bezeichnet wird, und eine Referenzlinie, die in der radialen Richtung außen von der Referenzlinie M₁₂₀ liegt und sich in der axialen Richtung erstreckt und von der ein Abstand zu der Referenzlinie M₁₂₀ das 0,2-fache der Höhe Ht₁₂₀ beträgt, als L₁₂₀ bezeichnet wird,
ein Krümmungsradius Rp₁₂₀ eines Kreisbogens Cp₁₂₀, der einen Mittelpunkt Zp₁₂₀ auf der Referenzlinie M₁₂₀ hat und durch einen Schnittpunkt Pp₁₂₀ zwischen der Referenzlinie M₁₂₀ und der Außenfläche der Karkasse (12, 52) und einen Schnittpunkt Pq₁₂₀ zwischen der Referenzlinie L₁₂₀ und der Außenfläche der Karkasse (12, 52) verläuft, kleiner ist als ein Abstand Lp₁₂₀ zwischen dem Mittelpunkt Zp₁₂₀ und dem Ende (41, 70) des ersten Kernreiters (32, 64).

2. Luftreifen (2, 42) nach Anspruch 1, wobei ein Verhältnis (Rp₁₂₀/Rp₀) des Krümmungsradius Rp₁₂₀ relativ zu dem Krümmungsradius Rp₀ nicht kleiner als 0,4 und nicht größer als 0,7 ist.

3. Luftreifen (2, 42) nach Anspruch 1 oder 2, wobei:
wenn ein Schnittpunkt zwischen der Referenzlinie L₀ und dem Profil (38) der Außenfläche des Reifens (2, 42) als Pl₀ bezeichnet wird,
ein Krümmungsradius Rm₀ eines Kreisbogens Cm₀, der einen Mittelpunkt Zm₀ auf der Referenzlinie M₀ hat und durch die Referenzposition Pm₀ verläuft und dessen Schnittpunkt Pl₀ kleiner ist als ein Abstand Lm₀ zwischen dem Mittelpunkt Zm₀ und dem Ende (41, 70) des ersten Kernreiters (32, 64); und
wenn ein Schnittpunkt zwischen der Referenzlinie L₁₂₀ und dem Profil (38) der Außenfläche des Reifens (2, 42) als Pl₁₂₀ bezeichnet wird,
ein Krümmungsradius Rm₁₂₀ eines Kreisbogens Cm₁₂₀, der einen Mittelpunkt Zm₁₂₀ auf der Referenzlinie M₁₂₀ hat und durch die Referenzposition Pm₁₂₀ und den Schnittpunkt Pl₁₂₀ verläuft, kleiner ist als ein Abstand Lm₁₂₀ zwischen dem Mittelpunkt Zm₁₂₀ und dem Ende (41, 70) des ersten Kernreiters (32, 64).

4. Luftreifen (2, 42) nach Anspruch 3, wobei ein Verhältnis (Rm₁₂₀/Rm₀) des Krümmungsradius Rm₁₂₀ relativ zu dem Krümmungsradius Rm₀ nicht kleiner als 0,4 und nicht größer als 0,7 ist.

5. Luftreifen (42) nach einem der Ansprüche 1 bis 4, wobei
der Wulst (50) ferner einen zweiten Kernreiter (66) aufweist, der in der axialen Richtung außen von dem ersten Kernreiter (64) angeordnet ist,
die Karkasse (52) eine Karkasslage (72) umfasst,
die Karkasslage (72) einen Hauptabschnitt (72a), der sich von einem der Wülste (50) zu dem anderen der Wülste (50) erstreckt, und einen Umschlagabschnitt (72b), der in der axialen Richtung außen von jedem Wulst (50) angeordnet ist, aufweist,
der Umschlagabschnitt (72b) sich zwischen dem ersten Kernreiter (64) und dem zweiten Kernreiter (66) befindet, und
in einem Zustand, in dem der Reifen (42) auf die normale Felge (40) aufgezogen und mit Luft auf den normalen Innendruck aufgeblasen ist und keine Last auf den Reifen (42) ausgeübt wird,
ein Verhältnis (Hc/H2) einer Höhe Hc in der radialen Richtung von einer Wulstbasislinie (BBL) zu einem äußeren Rand (76, 80) des Umschlagabschnitts (72b) der Karkasslage (72), relativ zu einer Höhe H2 in der radialen Richtung von der Wulstbasislinie (BBL) zu einem äußeren Rand (68) des zweiten Kernreiters (66) nicht weniger als 1,05 beträgt.

6. Luftreifen (42) nach einem der Ansprüche 1 bis 4, wobei
der Wulst (50) ferner einen zweiten Kernreiter (66) aufweist, der in der axialen Richtung außen von dem ersten Kernreiter (64) angeordnet ist,
die Karkasse (52) eine Karkasslage (72) umfasst,
die Karkasslage (72) einen Hauptabschnitt (72a), der sich von einem der Wülste (50) zu dem anderen der Wülste (50) erstreckt, und einen Umschlagabschnitt (72b), der in der axialen Richtung außen von jedem Wulst (50) angeordnet ist, aufweist,
der Umschlagabschnitt (72b) sich zwischen dem ersten Kernreiter (64) und dem zweiten Kernreiter (66) befindet, und
in einem Zustand, in dem der Reifen (42) auf die normale Felge (40) aufgezogen und mit Luft auf den normalen Innendruck aufgeblasen ist und keine Last auf den Reifen (42) ausgeübt wird,
ein Verhältnis (H2/Hc) einer Höhe H2 in der radialen Richtung von einer Wulstbasislinie (BBL) zu einem äußeren Rand (68) des zweiten Kernreiters (66), relativ zu einer Höhe Hc in der radialen Richtung von der Wulstbasislinie (BBL) zu einem äußeren Rand (76, 80) des Umschlagabschnitts (72b) der Karkasslage (72) nicht weniger als 1,05 beträgt.

7. Luftreifen (42) nach Anspruch 5 oder 6, wobei der zweite Kernreiter (66) eine Dicke (T2) von nicht weniger als 1,5 mm und eine Länge (L2) von nicht weniger als 20 mm und nicht mehr als 60 mm aufweist.

## Revendications

1. Bandage pneumatique (2, 42) comprenant une bande de roulement (4, 44), une paire de parois latérales (6, 46), une paire de talons (10, 50), et une carcasse (12, 52), dans lequel :
chaque talon (10, 50) inclut une âme (30, 62) et une première coiffe (32, 64) s'étendant depuis l'âme (30, 62) vers l'extérieur dans une direction radiale ;
**caractérisé en ce que**
dans un état dans lequel le pneumatique (2, 42) est monté sur une jante normale (40) et gonflé avec de l'air à une pression interne normale, sans appliquer de charge au pneumatique (2, 42),
lorsqu'une position, sur un profil (38) d'une surface extérieure du pneumatique (2, 42), à laquelle une largeur du pneumatique (2, 42) est à son maximum est désignée comme position de référence Pm₀, une ligne droite qui passe à travers la position de référence Pm₀ et qui s'étend dans une direction axiale est désignée comme ligne de référence M₀, qu'une hauteur depuis la position de référence Pm₀ jusqu'à une extrémité extérieure (PE) de la bande de roulement (4, 44) dans la direction radiale est désignée par Ht₀, et qu'une ligne de référence qui est située à l'extérieur de la ligne de référence M₀ dans la direction radiale et qui s'étend dans la direction axiale et depuis laquelle une distance à la ligne de référence M₀ est 0,2 fois la hauteur Ht₀ est désignée par L₀,
un rayon de courbure Rp₀ d'un arc circulaire Cp₀ qui a un centre Zp₀ sur la ligne de référence M₀ et qui passe à travers un point d'intersection Pp₀ entre la ligne de référence M₀ et une surface extérieure de la carcasse (12, 52) et un point d'intersection Pq₀ entre la ligne de référence L₀ et la surface extérieure de la carcasse (12, 52) est plus petit qu'une distance Lp₀ entre le centre Zp et une extrémité (41, 70) de la première coiffe (32, 64) ; et
dans un état dans lequel le pneumatique (2, 42) est monté sur la jante normale (40) et gonflé avec de l'air à la pression interne normale, et qu'une charge égale à 120 % de la charge normale est appliquée au pneumatique (2, 42),
lorsqu'une position, sur le profil (38) de la surface extérieure du pneumatique (2, 42), à laquelle la largeur du pneumatique (2, 42) est à son maximum est désignée comme position de référence Pm₁₂₀, qu'une ligne droite qui passe à travers la position de référence Pm₁₂₀ et qui s'étend dans la direction axiale est désignée comme ligne de référence M₁₂₀, qu'une hauteur depuis la position de référence Pm₁₂₀ jusqu'à l'extrémité extérieure (PE) de la bande de roulement (4, 44) dans la direction radiale est désignée par Ht₁₂₀, et qu'une ligne de référence qui est située à l'extérieur de la ligne de référence M₁₂₀ dans la direction radiale et qui s'étend dans la direction axiale et depuis laquelle une distance jusqu'à la ligne de référence M₁₂₀ est 0,2 fois la hauteur Ht₁₂₀ est désignée par L₁₂₀,
un rayon de courbure Rp₁₂₀ d'un arc circulaire Cp₁₂₀ qui a un centre Zp₁₂₀ sur la ligne de référence M₁₂₀ et qui passe à travers un point d'intersection Pp₁₂₀ entre la ligne de référence M₁₂₀ et la surface extérieure de la carcasse (12, 52) et un point d'intersection Pq₁₂₀ entre la ligne de référence L₁₂₀ et la surface extérieure de la carcasse (12, 52) est plus petit qu'une distance Lp₁₂₀ entre le centre Zp₁₂₀ et l'extrémités (41, 70) de la première coiffe (32, 64).

2. Bandage pneumatique (2, 42) selon la revendication 1, dans lequel un rapport (Rp₁₂₀/Rp₀) du rayon de courbure Rp₁₂₀ par rapport au rayon de courbure Rp₀ n'est pas inférieur à 0,4 et n'est pas supérieur à 0,7.

3. Bandage pneumatique (2, 42) selon la revendication 1 ou 2, dans lequel :
lorsqu'un point d'intersection entre la ligne de référence L₀ et le profil (38) de la surface extérieure du pneumatique (2, 42) est désigné par Pl₀,
un rayon de courbure Rm₀ d'un arc circulaire Cm₀ qui a un centre Zm₀ sur la ligne de référence M₀ et qui passe à travers la position de référence Pm₀ et le point d'intersection Pl₀ est plus petit qu'une distance Lm₀ entre le centre Zm₀ et l'extrémité (41, 70) de la première coiffe (32, 64) ; et
lorsqu'un point d'intersection entre la ligne de référence L₁₂₀ et le profil (38) de la surface extérieure du pneumatique (2, 42) est désigné par Pl₁₂₀,
un rayon de courbure Rm₁₂₀ d'un arc circulaire Cm₁₂₀ qui a un centre Zm₁₂₀ sur la ligne de référence M₁₂₀ et qui passe à travers la position de référence Pm₁₂₀ et le point d'intersection Pl₁₂₀ est plus petit qu'une distance Lm₁₂₀ entre le centre Zm₁₂₀ et l'extrémité (41, 70) de la première coiffe (32, 64).

4. Bandage pneumatique (2, 42) selon la revendication 3, dans lequel un rapport (Rm₁₂₀/Rm₀) du rayon de courbure Rm₁₂₀ par rapport au rayon de courbure Rm₀ n'est pas inférieur à 0,4 et n'est pas supérieur à 0,7.

5. Bandage pneumatique (42) selon l'une quelconque des revendications 1 à 4, dans lequel
le talon (52) inclut en outre une seconde coiffe (66) située à l'extérieur de la première coiffe (64) dans la direction axiale,
la carcasse (52) inclut une nappe de carcasse (72),
la nappe de carcasse (72) inclut une portion principale (72a) s'étendant depuis l'un des talons (50) jusqu'à l'autre des talons (50) et une portion retroussée vers le haut (72b) située à l'extérieur de chaque talon (50) dans la direction axiale,
la portion retroussée vers le haut (72b) est située entre la première coiffe (64) et la seconde coiffe (66), et
dans un état dans lequel le pneumatique (42) est monté sur la jante normale (40) et gonflé avec de l'air à la pression interne normale et qu'aucune charge n'est appliquée au pneumatique (42),
un rapport (Hc/H2) d'une hauteur Hc dans la direction radiale depuis une ligne de base de talon (BBL) jusqu'à un bord extérieur (76, 81) de la portion retroussée vers le haut (72b) de la nappe de carcasse (72), par rapport à une hauteur H2 dans la direction radiale depuis la ligne de base de talon (BBL) jusqu'à un bord extérieur (62) de la seconde coiffe (66), n'est pas inférieur à 1,05.

6. Bandage pneumatique (42) selon l'une quelconque des revendications 1 à 4, dans lequel
le talon (50) inclut en outre une seconde coiffe (66) située à l'extérieur de la première coiffe (64) dans la direction axiale,
la carcasse (52) inclut une nappe de carcasse (72),
la nappe de carcasse (72) inclut une portion principale (72a) s'étendant depuis l'un des talons (50) jusqu'à l'autre des talons (50) et une portion retroussée vers le haut (72b) située à l'extérieur de chaque talon (50) dans la direction axiale,
la portion retroussée vers le haut (72b) est située entre la première coiffe (64) et la seconde coiffe (66), et
dans un état dans lequel le pneumatique (42) est monté sur la jante normale (40) et gonflé avec de l'air à la pression interne normale et qu'aucune charge n'est appliquée au pneumatique (42),
un rapport (H2/Hc) d'une hauteur H2 dans la direction radiale depuis une ligne de base de talon (BBL) jusqu'à un bord extérieur (68) de la seconde coiffe (66), par rapport à une hauteur Hc dans la direction radiale depuis la ligne de base de talon (BBL) jusqu'à un bord extérieur (76, 81) de la portion retroussée vers le haut (72b) de la nappe de carcasse (72), n'est pas inférieur à 1,05.

7. Bandage pneumatique (42) selon la revendication 5 ou 6, dans lequel la seconde coiffe (66) a une épaisseur (T2) qui n'est pas inférieure à 1,5 mm, et une longueur (L2) qui n'est pas inférieure à 20 mm et qui n'est pas supérieure à 60 mm.
